Europäisches Patentamt

European Patent Office

Office européen des brevets

(19)

(11) Veröffentlichungsnummer: **0 156 231 B1**

(12) **EUROPÄISCHE PATENTSCHRIFT**

(45) Veröffentlichungstag der Patentschrift:
20.12.89

(21) Anmeldenummer: 85102778.9

(22) Anmeldetag: 12.03.85

(51) Int. Cl.⁴: **B 23 K 26/00**, B 23 K 15/00

(54) Vorrichtung zur Bearbeitung von Werkstücken durch einen Energiestrahl hoher Leistungsdichte, insbesondere einen Laserstrahl eines CO2-Lasers.

(30) Priorität: 26.03.84 DE 3411126

(43) Veröffentlichungstag der Anmeldung:
02.10.85 Patentblatt 85/40

(45) Bekanntmachung des Hinweises auf die Patenterteilung:
20.12.89 Patentblatt 89/51

(84) Benannte Vertragsstaaten:
AT BE CH DE FR GB IT LI NL SE

(56) Entgegenhaltungen:
DE-A- 2 346 197
DE-C- 749 939
US-A- 3 463 594

LASER + ELEKTRO-OPTIK, Band 14, Nr. 2, Juni 1982, Seiten 47-51, Stuttgart; H. OPOWER "Die physikalischen Grundlagen des Schneidens von Metallen mit CO2-Hochleistungslasern"
G. HERDEN "Schweiss- und Schneidtechnik", 1960, VEB CARL MARHOLD VERLAG, Halle (Saale)
PATENT ABSTRACTS OF JAPAN, Band 5, Nr. 93 (M-74)[765], 17. Juni 1981

(73) Patentinhaber: BIAS Forschungs- und Entwicklungslabor für angewandte Strahltechnik, Ermlandstrasse 59, D-2820 Bremen 71 (DE)

(72) Erfinder: Jüptner, Werner, Grosse Loge 8,
D-2863 Ritterhude (DE)
Erfinder: Sepold, Gerd, Moosbeergweg 22, D-2903 Bad Zwischenahn (DE)
Erfinder: Rothe, Rüdiger, Wilde Rodung 4a,
D-2820 Bremen 70 (DE)

(74) Vertreter: Bolte, Erich, Dipl.-Ing. et al, Hollerallee 73,
D-2800 Bremen 1 (DE)

## Beschreibung

Die Erfindung betrifft eine Vorrichtung zur Bearbeitung von Werkstücken durch einen Strahl hoher Leistungsflußdichte, insbesondere einen Laserstrahl eines $CO_2$-Lasers, gemäß dem Oberbegriff des Anspruchs 1 bzw. 5.

Bei Vorrichtungen der hier angesprochenen Art, nämlich Laserbearbeitungsvorrichtungen, handelt es sich um relativ hochwertige Geräte. Man ist daher bestrebt, das gleiche Grundaggregat für mehrere unterschiedliche Bearbeitungsarten zu verwenden. Zu diesem Zweck wird jeweils ein der zu erfolgenden Bearbeitung entsprechender Bearbeitungsvorsatz der Laserbearbeitungsvorrichtung zugeordnet. Dadurch können zum Beispiel mit einem Grundgerät wahlweise Schweißarbeiten, Schneidarbeiten oder Oberflächenveredlungsarbeiten durchgeführt werden. Des weiteren sollen die Laserbearbeitungsvorrichtungen an unterschiedliche Werkstücke bzw. Werkstücklagen anpaßbar sein, d. h. Arbeiten mit beispielsweise horizontal bzw. vertikal gerichteten Laserstrahl ausführen können. Hierzu müssen die den Laserstrahl beeinflussenden Optiken, und zwar insbesondere die Bearbeitungsoptiken, den gegebenen Arbeitsbedingungen anpaßbar sein.

Schließlich ist besonders bei Vorrichtungen, die häufig zum Schweißen benutzt werden, eine gelegentliche Reinigung notwendig. Dieses betrifft vor allem die in der Nähe des Werkstücks befindliche Bearbeitungsoptik, die erheblichen Belastungen durch Rauch, flüssige Metallspritze od. dgl. ausgesetzt ist. Dazu müssen vor allem die Umlenk- und Fokussierspiegel der Bearbeitungsoptik aus dem Gehäuse derselben ausbaubar sein.

Bei bekannten Vorrichtungen dieser Art ist eine Anpassung der Bearbeitungsoptik an unterschiedliche Bearbeitung bzw. eine Demontage von Umlenk- bzw. Fokussierspiegeln zur Reinigung oder Wartung entweder gar nicht oder mit erheblichem Aufwand möglich. Beispielsweise ist aus der Zeitschrift «Laser und Elektro-Optik» Vol. 14 (1982) Juni Nr. 2, Seiten 47 bis 51 eine gattungsgemäße Vorrichtung bekannt, bei der die Bearbeitungsoptik lösbar mit einem Bearbeitungsvorsatz verbunden ist. Dazu weist der runde Bearbeitungsvorsatz mehrere radial gerichtet von außen her einschraubbare Madenschrauben auf, die in eine korrespondierend zu den Madenschrauben angeordnete V-förmige Ringnut an der Bearbeitungsoptik formschlüssig eingreifen. Zwischen der Bearbeitungsoptik und dem Bearbeitungsvorsatz befindet sich im Bereich der V-förmigen Ringnut ein Ringspalt, wodurch der Bearbeitungsvorsatz gegenüber der Bearbeitungsoptik in einer horizontalen Ebene nicht geführt ist. In dieser horizontalen Ebene muß somit der Bearbeitungsvorsatz gegenüber der Bearbeitungsoptik durch entsprechendes Verdrehen der Madenschrauben in aufwendiger Weise justiert werden. Da zum Lösen des Bearbeitungsvorsatzes und der Bearbeitungsoptik die Madenschrauben gelöst werden müssen, muß beim darauf folgenden Anbau des Bearbeitungsvorsatzes an die Bearbeitungsoptik eine erneute Justierung erfolgen. Dieses hat den Nachteil, daß bei der bekannten Laserbearbeitungsvorrichtung die Verbindung des Bearbeitungsvorsatzes mit der Bearbeitungsoptik ein aufwendiges Ausrichten erfordert. Dabei ist selbst bei großem Justieraufwand keine Reproduktion einer vorher vorgenommenen Justierung möglich.

Der Erfindung liegt die Aufgabe zugrunde, eine Vorrichtung zur Bearbeitung von Werkstücken durch einen Energiestrahl hoher Leistungsdichte zu schaffen, bei der an einer Bearbeitungsoptik zum universellen Einsatz und zur leichten Wartung Bearbeitungsvorsätze bzw. Strahlumlenkmittel in einfacher Weise positionsgenau anschließbar sind.

Eine Vorrichtung zur Lösung dieser Aufgabe weist die Merkmale des Anspruchs 1 auf. Durch die mit Zentrierteilen versehenen Schrauborgane ist eine positionsgenaue Verbindung wenigstens der Strahlumlenkmittel mit dem Gehäuse der Bearbeitungsoptik ohne eine Neujustage positionsgenau und reproduzierbar möglich.

Zweckmäßigerweise sind die Zentrierteile einstückig mit den jeweiligen Schrauborganen verbunden, wodurch in einfacher und rascher Weise mit mindestens zwei Schrauborganen die Bearbeitsvorsätze bzw. Strahlumlenkmittel einem Gehäuse der Bearbeitungsoptik gleichzeitig befestigt und ausgerichtet werden können.

Eine weitere Vorrichtung zur Lösung der vorstehend genannten Aufgabe weist die Merkmale des Anspruchs 5 auf. Hierdurch sind geeignete Bearbeitungsvorsätze bzw. die Strahlumlenkmittel in einfacher Weise alternativ mit der Bearbeitungsoptik zu verbinden, indem die lediglich zum Lösen der Bearbeitungsvorsätze bzw. des Strahlumlenkmittels geringfügig losgeschraubten Spannpratzen nach der Herstellung eines Eingriffs der Zentrierorgane und der Verdrehsicherung wieder festgezogen werden müssen.

Die Unteransprüche betreffen vorteilhafte Ausbildungen und Anordnungen der Zentrierorgane sowie der Verdrehsicherung.

Fünf Ausbildungsbeispiele der erfindungsgemäßen Laserbearbeitungsvorrichtung werden nachfolgend anhand der Zeichnung näher erläutert. In dieser zeigen:

Fig. 1 eine schematisch dargestellte Seitenansicht einer Laserbearbeitungsvorrichtung,

Fig. 2 einen vertikalen Längsschnitt durch eine Bearbeitungsoptik,

Fig. 3 eine Stirnansicht der Bearbeitungsoptik gemäß der Fig. 2,

Fig. 4 eine teilweise Unteransicht unter die Bearbeitungsoptik im Bereich einer unverschlossenen Öffnung im Gehäuse,

Fig. 5 eine Einzelheit IV aus der Fig. 2 einer Universalverbindung im Bereich einer Spannklaue, in vergrößertem Maßstab,

Fig. 6 eine Draufsicht auf die Darstellung gemäß der Fig. 5,

Fig. 7 eine Einzelheit VII aus der Fig. 2 eines Kugeldruckstückes, in vergrößertem Maßstab,

Fig. 8 ein zweites Ausführungsbeispiel einer Bearbeitungsoptik im Querschnitt in der Ebene der Austrittsöffnungen durch zwei gegenüberliegende Sauganschlüsse,

Fig. 9 ein drittes Ausführungsbeispiel einer Bearbeitungsoptik gemäß der Fig. 2 mit einer Bohrung für ein Endoskop,

Fig. 10 ein viertes Ausführungsbeispiel eines Bearbeitungskopfes in der Darstellung gemäß der Fig. 9, jedoch mit durch einen Deckel und einen Aufnahmedeckel für ein Endoskop verschlossenen, seitlichen Öffnungen im Gehäuse,

Fig. 11 ein fünftes Ausführungsbeispiel eines Bearbeitungskopfes im vertikalen Längsschnitt, und

Fig. 12 den Bearbeitungskopf gemäß der Fig. 11 in einer Ansicht von oben.

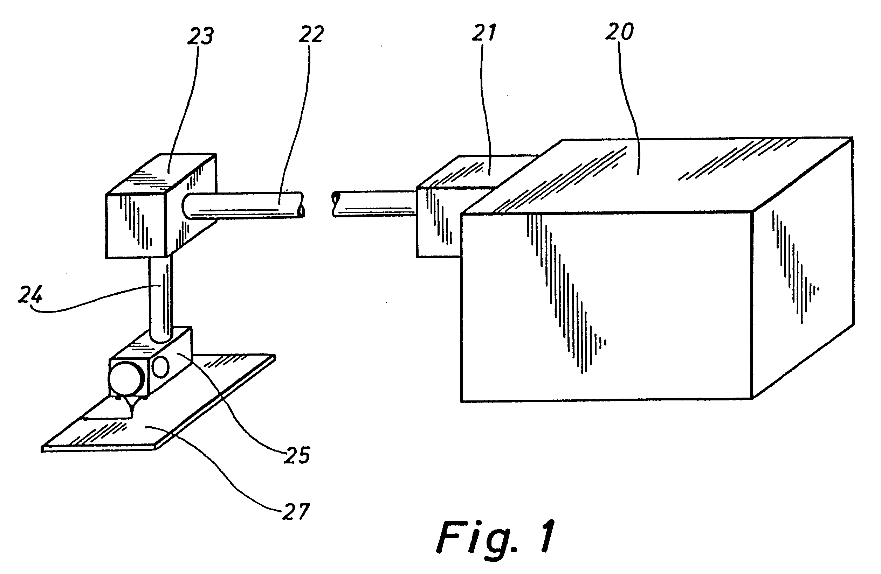

Aus der Fig. 1 geht anschaulich der prinzipielle Aufbau der erfindungsgemäßen Laserbearbeitungsvorrichtung hervor. Als Energiequelle dient hier ein Hochleitungslaser, nämlich ein $CO_2$-Laser 20. Am Strahlenausgang des $CO_2$-Lasers 20 befindet sich ein Teleskop 21. Letzteres ist über ein (horizontales) Schutzrohr 22 mit einem Umlenkspiegel 23 verbunden. Durch diesen wird der durch das Schutzrohr 22 ankommende Laserstrahl aus der horizontalen in eine vertikale Strahlrichtung umgelenkt. Vom Umlenkspiegel 23 gelangt der Laserstrahl schließlich durch ein weiteres (vertikales) Schutzrohr 24 zu einer Bearbeitungsoptik 25. Die Bearbeitungsoptik 25 ist in diesem Ausführungsbeispiel derart ausgebildet, daß der Laserstrahl in ihr zweimal umgelenkt wird, und zwar von einer vertikalen in eine horizontale Strahlrichtung und von dieser wiederum in eine dazu rechtwinklige Austrittsrichtung des Laserstrahls aus der Bearbeitungsoptik 25.

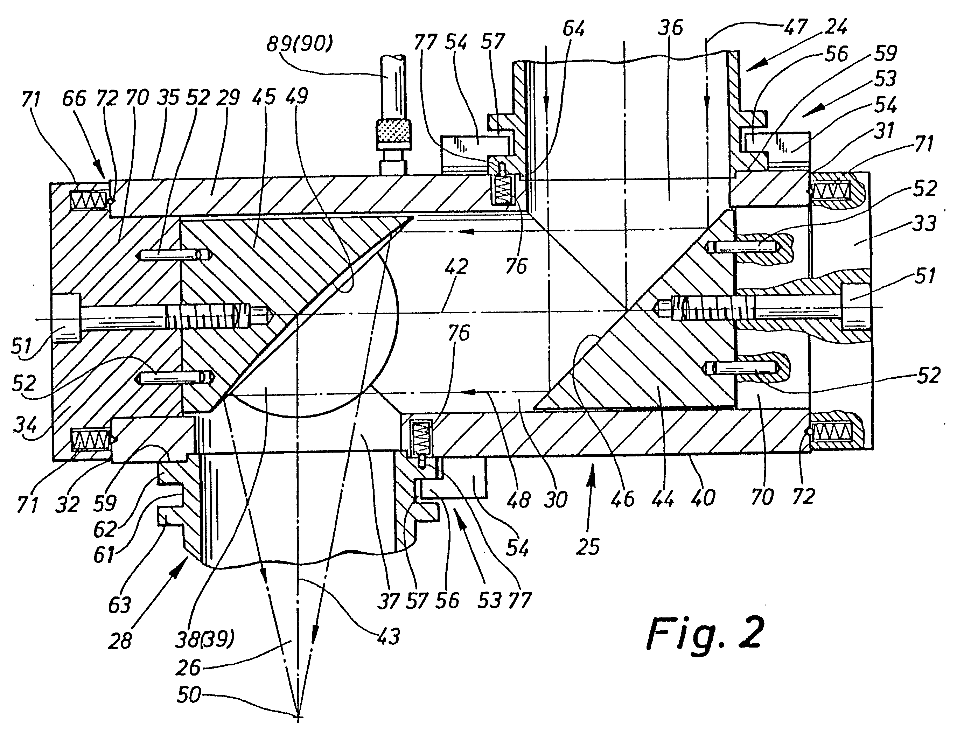

Wie des weiteren die Fig. 2 zeigt, verläßt der Laserstrahl in diesem Ausführungsbeispiel die Bearbeitungsoptik 25 in vertikaler Strahlrichtung, und zwar als fokussierter Laserstrahl 26. Mit einem derartigen fokussierten Laserstrahl 26 sind sowohl Schneid- als auch Schweissbearbeitungen an einem Werkstück 27 (Fig. 1) auszuführen. Entsprechend muß der am ausgangsseitigen Ende unterhalb der Bearbeitungsoptik 25 angeordnete, in der Fig. 2 nur teilweise dargestellte Bearbeitungsvorsatz 28 ausgebildet sein, nämlich entweder als Schweiß- oder als Schneidvorsatz.

Aus der Fig. 2 geht detailliert der Aufbau der Bearbeitungsoptik 25 hervor. Demnach verfügt diese über ein längliches, horizontales Gehäuse 29 mit einem quadratischen Querschnitt. Im Gehäuse 29 ist mittig eine längsgerichtete, kreisrunde Durchgangsbohrung 30 angeordnet. Die gegenüberliegenden Stirnseiten 31 bzw. 32 des Gehäuses 29 sind durch jeweils einen flanschartig ausgebildeten Deckel 33 bzw. 34 verschlossen.

Das Gehäuse 29 weist in diesem Ausführungsbeispiel insgesamt vier Öffnungen in seinen Wandungen auf. In dem zur Stirnseite 31 gerichteten Endbereich des Gehäuses 29 befindet sich eine in einer oberen Wand 35 desselben angeordnete Eintrittsöffnung 36 für den vom Umlenkspiegel 23 kommenden Laserstrahl. Die übrigen drei Öffnungen, nämlich die Austrittsöffnungen 37, 38 und 39, befinden sich im gegenüberliegenden Endbereich des Gehäuses 29. Während die Austrittsöffnung 37 in einer unteren Wand 40 des Gehäuses 29 angeordnet ist, sind die beiden übrigen Austrittsöffnungen 38 und 39 in zwei gegenüberliegenden Seitenwänden 41 des Gehäuses 29 angeordnet. Alle drei Austrittsöffnungen 37, 38 und 39 liegen in einer gemeinsamen, quer zu einer Längsachse 42 der Bearbeitungsoptik 25 verlaufenden Ebene, in der auch eine Längsmittelachse 43 des fokussierten Laserstrahls 26 liegt.

Im Gehäuse 29 der Bearbeitungsoptik 25 sind die zur Umlenkung des Laserstrahls erforderlichen Spiegel angeordnet. Im vorliegenden Ausführungsbeispiel befinden sich im Gehäuse 29 ein zylindrischer Umlenkspiegel 44 und ein ebenfalls zylindrischer Fokussierspiegel 45. Der Umlenkspiegel 44 ist der Eintrittsöffnung 36 zugeordnet. Er weist eine um 45° zur Längsachse 42 der Bearbeitungsoptik 25 geneigte, ebene Reflexionsfläche 46 auf. Damit lenkt der Umlenkspiegel 45 den vertikal durch die Eintrittsöffnung 36 in das Gehäuse 29 eintretenden, zylindrischen Laserstrahl 47 in einen vertikal im Gehäuse 29 in Richtung der Längsachse 42 desselben verlaufenden Laserstrahl 48 um. Durch die um 45° geneigte, plane Reflexionsfläche 46 des Umlenkspiegels 44 weist der horizontal verlaufende Laserstrahl 48 in etwa die gleiche Gestalt des in die Bearbeitungsoptik 25 eintretenden Laserstrahls 47 auf. Vom Umlenkspiegel 44 gelangt der Laserstrahl 48 auf den gegenüberliegenden Fokussierspiegel 45, der alternativ einer der Austrittsöffnungen 37, 38 bzw. 39 zuzuordnen ist. Der Fokussierspiegel 45 weist eine parabolische, d. h. konkave Reflexionsfläche 49 auf. Auch die parabolische Reflexionsfläche 49 ist derart zur Längsachse 42 der Bearbeitungsoptik 25 geneigt, daß der Fokussierspiegel 45 eine Strahlumlenkung von 90° bewirkt. Dadurch wird bei der in der Fig. 2 gezeigten Relativlage des Fokussierspiegels 45 der horizontale, zylindrische Laserstrahl 48 erneut in eine Vertikale umgelenkt, aber dabei gleichzeitig durch die konkave Wölbung der Reflexionsfläche 49 des Fokussierspiegels 45 fokussiert zum Laserstrahl 26. Ein Fokuspunkt 50 des in der Bearbeitungsoptik 25 durch den Fokussierspiegel 45 fokussierten Laserstrahls 26 liegt bei diesem Ausführungsbeispiel außerhalb des Gehäuses 29, nämlich im Bereich des Bearbeitungsvorsatzes 28.

Befestigt sind die Spiegel (Umlenkspiegel 44; Fokussierspiegel 45) an jeweils einem der stirnseitigen Deckel 33 bzw. 34 des Gehäuses 29. So ist der Umlenkspiegel 44 mit der innenliegenden Stirnfläche des Deckels 33 und der Fokussierspiegel 45 mit der innenliegenden Stirnfläche des Deckels 34 verbunden, und zwar jeweils mit einer in der Längsachse 42 der Bearbeitungsoptik 25 liegenden Schraube 51 von den äußeren Stirnseiten des Gehäuses 29 her. Zur exakten Positionierung und Verdrehsicherung des Umlenkspiegels 44 bzw. des Fokussierspiegels 45 gegenüber den ihnen jeweils zugeordneten Deckeln 33 bzw. 34 dienen im vorliegenden Ausführungsbeispiel jeweils zwei Zylinderstifte 52.

Wie des weiteren aus der Fig. 2 zu entnehmen, sind der Umlenkspiegel 44 und der Fokussierspiegel 45 im Durchmesser geringfügig kleiner als die zylindrische Durchgangsbohrung 30 im Gehäuse 29 bemessen. Dadurch wird ein Verklemmen der Spiegel im Gehäuse 29 verhindert, wenn sich diese infolge thermischer Erhitzung ausdehnen.

Im Ausführungsbeispiel der Fig. 1 bis 3 ist der Eintrittsöffnung 36 des Gehäuses 29 ein unteres Ende des Schutzrohrs 24 und der in der unteren Wand 40 befindlichen Austrittsöffnung 37 der Bearbeitungsvorsatz 28 zugeordnet. Die Befestigung des Schutzrohrs 24 und des Bearbeitungsvorsatzes 28 an der Bearbeitungsoptik 25 erfolgt jeweils durch einen Universalanschluß 53. Auch an den seitlichen Austrittsöffnungen 38 und 39 im Gehäuse 29 können Bearbeitungsvorsätze bzw. Versorgungsanschlüsse mit einem Universalanschluß 53 am Bearbeitungskopf 25 befestigt werden. An der Eintrittsöffnung 36 und den Austrittsöffnungen 37, 38 bzw. 39 des Gehäuses 29 können bei Bedarf prinzipiell gleichermaßen aufgebaute Universalanschlüsse 53 angebracht sein, die im vorliegenden Ausführungsbeispiel auch gleiche Abmessungen aufweisen können, weil die Durchmesser der Eintrittsöffnung 36 und der Austrittsöffnungen 37, 38 und 39 in etwa gleich groß sind.

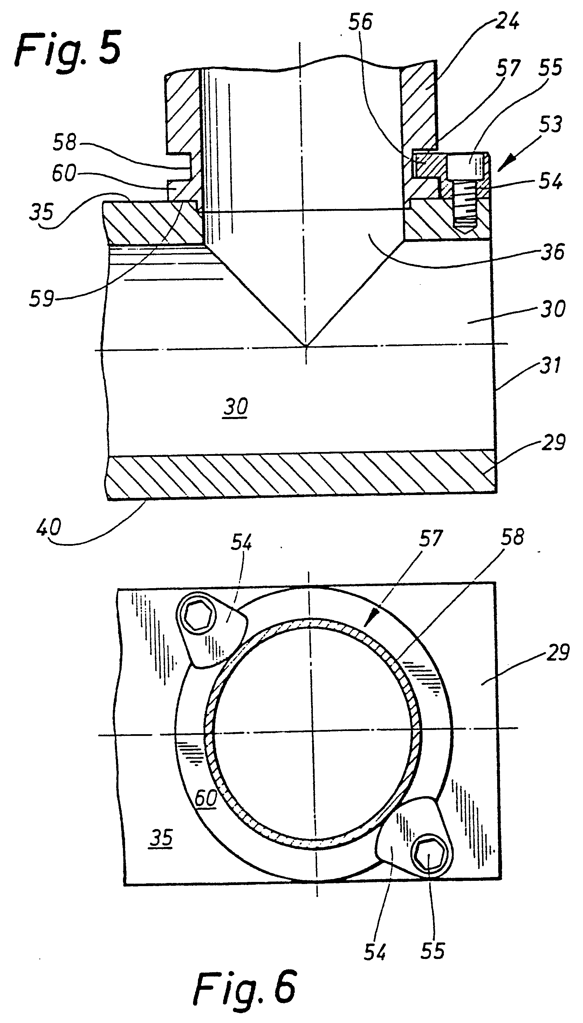

Der Aufbau eines Universalanschlusses 53 geht detailliert aus den Fig. 5 und 6 hervor. Demnach weist der Universalanschluß 53 zwei durch jeweils eine Schraube 55 auf der oberen Wand 35 des Gehäuses 29 aufgeschraubte Spannpratzen 54 auf. Wie die Fig. 6 zeigt, liegen sich die beiden Spannpratzen 54 diagonal bezüglich der oberen Wand 35 gegenüber. Jede Spannpratze 54 weist einen L-förmigen Querschnitt auf mit einer zur Mitte der Eintrittsöffnung 36 vorstehenden Nase 56. Letztere ist gegenüber der oberen Wand 35 des Gehäuses 29 geringfügig hochversetzt, bildet also zwischen ihrer Unterseite und der oberen Wand 35 einen Freiraum 57.

Das untere, zum Gehäuse 29 gerichtete Ende des Schutzrohrs 24 weist in diesem Ausführungsbeispiel eine umlaufende Ringnut 58 auf. Diese ist mit geringfügigem Abstand von einer an der oberen Wand 35 des Gehäuses 29 anliegenden Stirnwand 59 des Schutzrohrs 24 angeordnet, und zwar eingedreht. Die Abmessungen der Ringnut 58 und ihr Abstand von der Stirnwand 59 sind derart gewählt, dass einerseits die Nasen 56 der Spannpratzen 54 in die Ringnut 58 eingreifen und andererseits der zwischen der Ringnut 58 und der Stirnwand 59 des Schutzrohrs 24 verbleibende Ring 60 den Freiraum 57 zwischen den Nasen 56 und der oberen Wand 35 ausfüllt. Die auf dem Gehäuse 29 festgeschraubten Spannpratzen 54 klemmen mit ihren Nasen 56 dann den Ring 60 des Schutzrohrs 24 gegenüber dem Gehäuse 29 fest.

Alternativ kann eine Ringnut 61 am Schutzrohr 24 bzw. am Bearbeitungsvorsatz 28 auch durch zwei mit Abstand voneinander an denselben angeordnete Kragen 62 und 63 gebildet sein, wie die Fig. 2 beispielsweise zeigt.

Aus der Fig. 5 ist weiterhin ein Zentrieransatz 64 an der Stirnwand 59 des Schutzrohrs 24 zu erkennen. Dieser weist einen gegenüber den Außenabmessungen des Schutzrohrs 24 zurückgesetzten Durchmesser auf. Der Zentrieransatz 64 greift in eine passend hierzu ausgebildete Ausnehmung 65 in der oberen Wand 35 des Gehäuses 29, nämlich der Eintrittsöffnung 36, ein. Der Zentrieransatz 64 und die Ausnehmung 65 ermöglichen eine radiale Zentrierung des Schutzrohrs 24 gegenüber dem Gehäuse 29 der Bearbeitungsoptik 25.

Mit einem derartig aufgebauten Universalanschluß 53 erfolgt ein Lösen der Verbindung, indem zunächst die beiden Schrauben 55 der Spannpratzen 54 so weit gelöst werden, daß der möglichst kurz bemessene Zentrieransatz 64 des Schutzrohrs 24 aus der Ausnehmung 65 so weit herausgehoben werden kann, daß das Schutzrohr 24 und die Bearbeitungsoptik 25 seitlich zueinander verschoben werden können, bis die Nasen 56 der Spannpratzen 54 außer Eingriff mit der Ringnut 58 gelangen. In umgekehrter Reihenfolge erfolgt die Montage, indem zunächst das zu montierende Schutzrohr 24 zwischen die Spannpratzen 54 geschoben wird, wobei dei Nasen 56 der Spannpratzen 54 in Eingriff mit der Ringnut 58 gelangen. Eine radiale Ausrichtung des Schutzrohrs 24 gegenüber dem Gehäuse 29 erfolgt dann dadurch, daß der Zentrieransatz 64 in die Ausnehmung 65 hineingeschoben wird, Hiernach können die Schrauben 55 der Spannpratzen 54 so weit angezogen werden, daß die Nasen 56 über den Ring 60 das Schutzrohr 24 gegen das Gehäuse 29 verspannen.

Derartige Universalanschlüsse 53 sind auch den Austrittsöffnungen 37, 38 und 39 zur Befestigung eines Bearbeitungsvorsatzes 28 an der Bearbeitungsoptik 25 zugeordnet. Zweckmäßigerweise verfügen sämtliche Universalanschlüsse 53 an der Eintrittsöffnung 36 und den Austrittsöffnungen 37, 38 und 39 über in etwa gleiche Abmessungen.

In diesem Ausführungsbeispiel sind auch die Deckel 33 und 34 mit dem Gehäuse 29 über jeweils einen Universalanschluß 66 verbunden. Letzterer entspricht im Prinzip dem Aufbau der Universalanschlüsse 53 für das Schutzrohr 24 und die Bearbeitungsvorsätze 28. Zwei Spannpratzen 67 sind hier durch ebenfalls je eine Schraube 68 mit jeweils einer der Stirnseiten 31 bzw. 32 des Gehäuses 29 verschraubt, wobei sich die Spannpratzen 67 in einer Diagonalen der Stirnseite 31 bzw. 32 gegenüberliegen. Zum Eingriff der Spannpratzen 67 weisen hier die Deckel 33 und 34 vier Nutabschnitte 69 auf. Die Nutabschnitte 69 sind aus geradverlaufenden Einfräsungen in die Mantelfläche der kreisrunden Deckel 33 bzw. 34 hergestellt. Die Anordnung der Nutabschnitte 69 ist dabei derart getroffen, daß sich jeweils zwei Nutabschnitte 69 paarweise gegenüberliegen, wobei die beiden Paare aus den gegenüberliegenden Nutabschnitten 69 um 90° zueinander versetzt sind. Die Deckel 33 und 34 können dadurch in jeweils um 90° zueinander versetzter Relativlage bezüglich der Längsachse 42 mit der Bearbeitungsoptik 25 verschraubt werden. Durch eine derartige Verdrehung, insbesondere des Deckels 34, gegenüber dem Gehäuse 29 kann der Fokussierspiegel 45 alternativ der (unteren) Austrittsöffnung 37 bzw. einer der beiden (seitlichen) Austrittsöffnungen 38 bzw. 39 je nach der zu erfolgenden Bearbeitung zugeordnet werden. Auch die Universalanschlüsse 66 der Deckel 33 und 34 weisen jeweils eine radiale Zentrierung auf mit einem an der innenliegenden Stirnseite der Deckel 33 bzw. 34 angeordneten Zylinderansatz 70, der durch die Stirnseiten 31 bzw. 32 in die Durchgangsbohrung 30 des Gehäuses 29 hineinragt zur radialen Zentrierung des Umlenkspiegels 44 und des Fokussierspiegels 45 in der Bearbeitungsoptik 25. Zu diesem Zweck weisen die Zylinderansätze 70 zu der Durchgangsbohrung 30 passende Abmessungen auf.

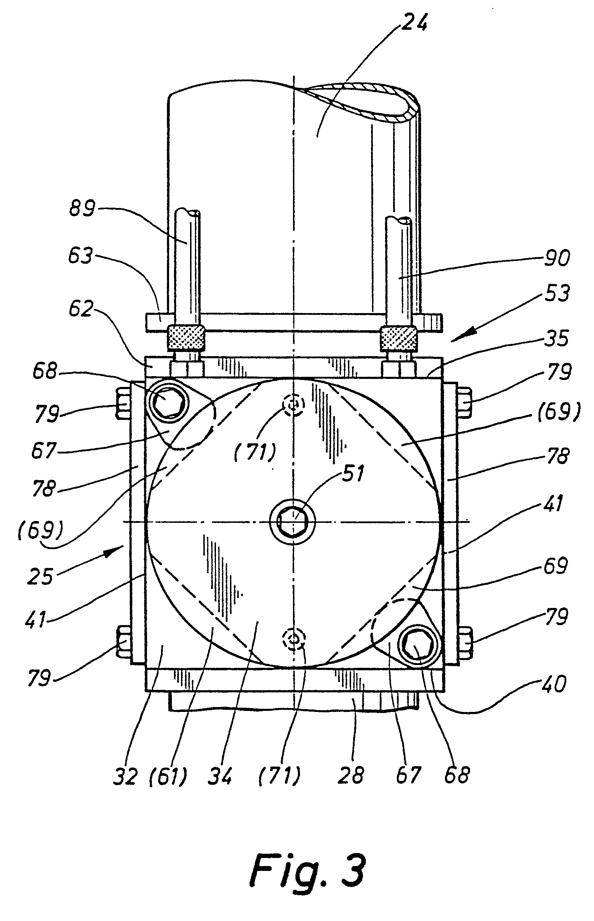

Zusätzlich zu der radialen Zentrierung ist den Universalanschlüssen 66 eine Verdrehsicherung zugeordnet. Wie die Fig. 2 zeigt, sind zur Verdrehsicherung der Deckel 33, 34 gegenüber den Stirnseiten 31, 32 des Gehäuses 29 in jedem Deckel 33, 34 zwei gegenüberliegende Kugeldruckstücke 71 angeordnet. Letztere liegen in den Randbereichen der Deckel 33 bzw. 34, und zwar, wie des weiteren die Fig. 3 zeigt, in denjenigen Bereichen, die von den Nutabschnitten 69 ausgespart sind.

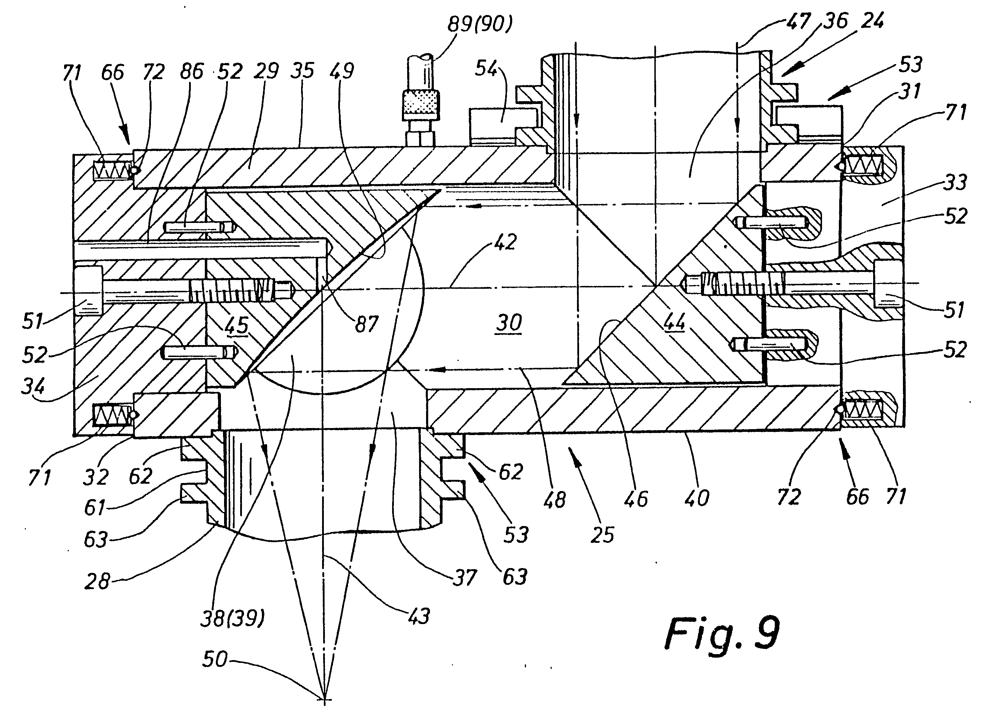

Die Fig. 7 zeigt vergrößert den Aufbau eines Kugeldruckstückes 71 bzw. einer Verdrehsicherung. Demnach ist das Kugeldruckstück 71 in eine im Deckel 33 angeordnete Sackbohrung 72 eingeschoben. An der zur Stirnseite 32 des Gehäuses 29 gerichteten Seite weist das Kugeldruckstück 71 eine Kugel 73 auf, die durch eine Druckfeder 74 gegen die Stirnseite 32 gedrückt wird. Das Kugeldruckstück 71 ist so weit in die Sackbohrung 72 hineingeschoben, dass die Kugel 73 teilweise gegenüber der an der Stirnseite 32 des Gehäuses 29 anliegenden Fläche des Deckels 34 vorsteht. Dabei steht der vorstehende Teil der Kugel 73 des Kugeldruckstücks 71 in Eingriff mit einer in der Stirnseite 32 angeordneten Sackbohrung 75. Letztere ist im Gegensatz zur Sackbohrung 72 des Kugeldruckstücks 71 kleiner bemessen, und zwar derart, daß der Mantel der Kugel 73 am oberen Rand der (kleinen) Sackbohrung 75 vollflächig zur Anlage kommt. Hierdurch wird eine formschlüssige Zentrierung des Deckels 34 gegenüber dem Gehäuse 29 erreicht.

Den beiden Kugeldruckstücken 71 im Deckel 34 sind hier insgesamt vier im Gehäuse 29 angeordnete (kleine) Sackbohrungen 75 zugeordnet. Die vier Sackbohrungen 75 sind gleichmäßig auf die Stirnfläche 32 verteilt, weisen also untereinander jeweils einen Versatz von 90° auf. Dabei sind zwei gegenüberliegenden Sackbohrungen 75 jeweils die Kugeldruckstücke 71 im Deckel 34 zugeordnet. Die übrigen beiden Sackbohrungen 75 dienen zur Zentrierung des Deckels 34, wenn dieser um 90° zusammen mit dem Fokussierspiegel 45 um die Längsachse 42 des Gehäuses 29 verdreht ist. Dadurch ist eine exakte Zuordnung des Fokussierspiegels 45 zu einer der drei um jeweils 90° zueinander versetzten Austrittsöffnungen 37, 38 bzw. 39 in der Bearbeitungsoptik 25 möglich, indem bei jeder 90°-Verdrehung die beiden Kugeldruckstükke 71 alternativ in zwei der (kleinen) Sackbohrungen 75 eingreifen.

In der zum Deckel 33 gerichteten Stirnseite 31 des Gehäuses 29 brauchen dagegen in diesem Ausführungsbeispiel nur zwei (kleine) Sackbohrungen 75 angeordnet sein, da der Umlenkspiegel 44 nur in einer einzigen, definierten Lage gegen Verdrehung zu sichern ist.

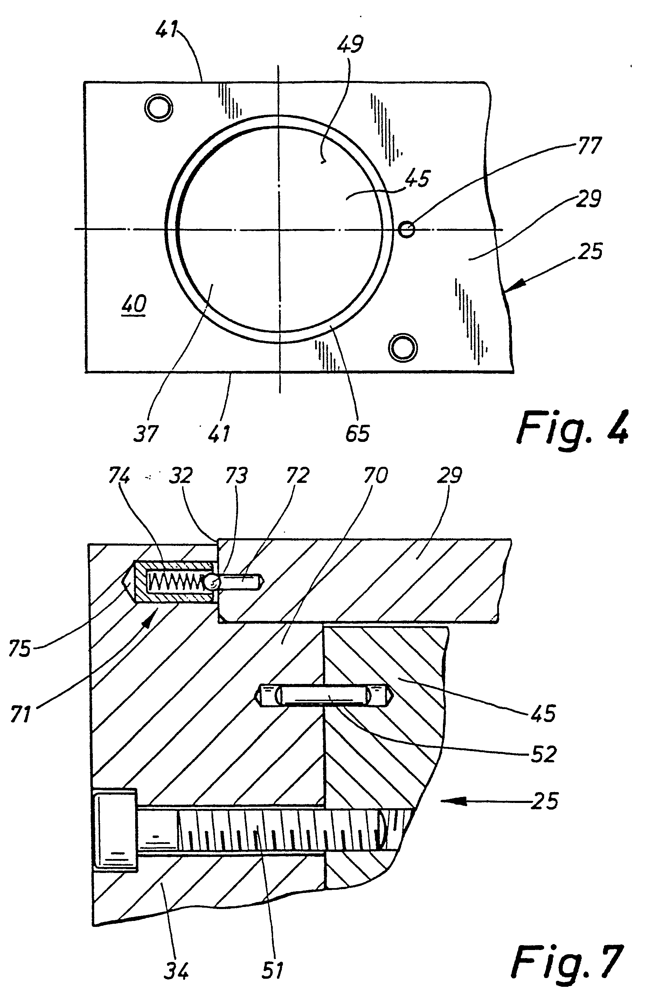

In der gleichen Weise können auch das Schutzrohr 24 und die Bearbeitungsvorsätze 28 gegenüber der Bearbeitungsoptik 25 gegen Verdrehung gesichert sein, nämlich ebenfalls durch Kugeldruckstücke 76, die den Universalanschlüssen 53 zugeordnet sind. Im vorliegenden Ausführungsbeispiel verfügen die Universalanschlüsse 43 – im Gegensatz zu den Deckeln 33, 34 – lediglich über je ein Kugeldruckstück 76, wie die Fig. 4 zeigt. Hier ist das Kugeldruckstück 76 im Gehäuse 29 angeordnet, während eine mit dem Kugeldruckstück 76 zusammenwirkende (kleine) Sackbohrung 77 in dem zur unteren Wand 40 des Gehäuses 29 gerichteten Kragen 62 angeordnet ist. Da die Bearbeitungsvorsätze 28 üblicherweise in der gleichen Stellung mit der Bearbeitungsoptik 25 zu verbinden sind, ist hier jedem Kugeldruckstück 76 des Universalanschlusses 53 nur eine (kleine) Sackbohrung 77 zugeordnet. Damit läßt sich ein Wechsel eines einmal anfänglich justierten Bearbeitungsvorsatzes 28 ohne eine erneute Justierung desselben vornehmen. Ebenso kann das Schutzrohr 24 mit einem Kugeldruckstück 76 gegenüber der Bearbeitungsoptik 25 verdrehgesichert sein.

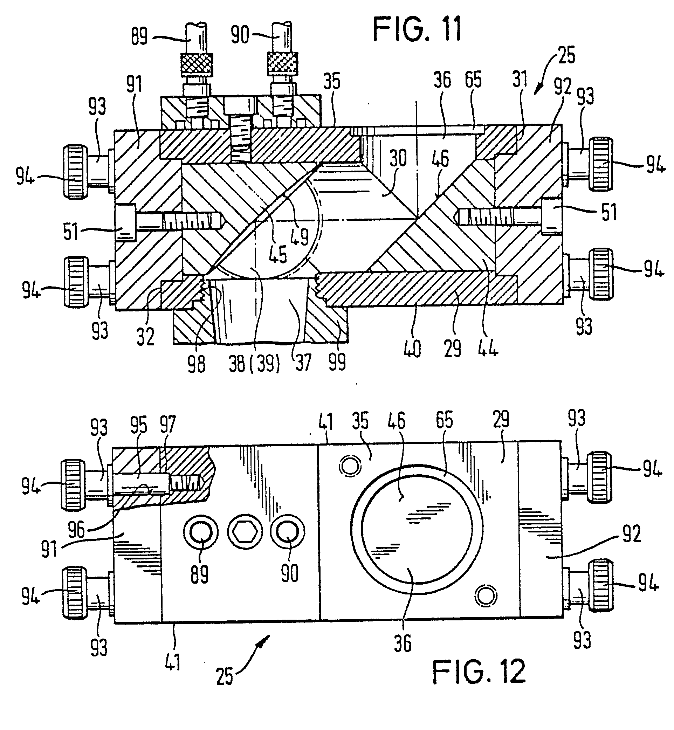

Eine andere (alternative) Befestigung der Deckel 91, 92 am Gehäuse 29 der Bearbeitungsoptik 25 zeigen die Fig. 11 und 12. Demnach sind die Deckel 91, 92 mit jeweils zwei diagonal gegenüberliegenden Rändelpaßschrauben 93 mit dem Gehäuse 29 verschraubt. Durch einen knopfartig ausgebildeten Rändelkopf 94 ist ein Befestigen und Lösen der Deckel 91, 92 von Hand – also ohne Werkzeug – möglich. Ein mittlerer, zylindrischer Zentrierteil 95 an den Rändelpaßschrauben 93, der in eine korrespondierende Durchgangsbohrung 96 in den Deckeln 91, 92 eintritt, und ein Zentrieransatz 97 im Gehäuse 29 dienen zur Justierung der Deckel 91, 92 gegenüber dem Gehäuse 29 der Bearbeitungsoptik 25. Dadurch wird gewährleistet, daß die Spiegel (Umlenkspiegel 44; Fokussierspiegel 45) nach jeder Demontage der Deckel 91, 92 stets wieder die etwa gleiche Lage einnehmen.

Insgesamt weist jeder Deckel 91, 92 vier symmetrisch angeordnete, gleich große Durchgangsbohrungen 96 auf. Diese ermöglichen eine Montage der Deckel 91, 92 in vier verschiedenen, um je 90° versetzten Relativlagen am Gehäuse 29.

Als weitere Besonderheit weist dieses Ausführungsbeispiel in der unteren Austrittsöffnung 37 des Gehäuses 29 ein Innengewinde 98 zur Befestigung eines Bearbeitungsvorsatzes 99 auf. Letzterer kann dadurch bei diesem Ausführungsbeispiel ohne die Spannpratzen 54 eines Universalanschlusses 53 einfach von Hand – also auch ohne Werkzeug – an das Gehäuse 29 angeschraubt werden.

Die freien Austrittsöffnungen, beispielsweise die seitlichen Austrittsöffnungen 38 und 39 in der Fig. 3, sind durch einen Blindflansch 78 verschlossen. Letztere sind aus Gründen der Vereinfachung in den vorliegenden Ausführungsbeispielen nicht mit einem Universalanschluß 53 am Gehäuse 29 angeschlossen, sondern durch zwei gegenüberliegende Schrauben 79 mit dem Gehäuse 29 verschraubt. Dabei ist das Lochbild für die Schrauben im Blindflansch 78 derart gewählt, daß die zur Befestigung der Spannpratzen 54 am Gehäuse 29 dienenden Gewindebohrungen verwendet werden können, nachdem die Spannpratzen 54 zuvor abgeschraubt worden sind.

Ein weiteres Ausführungsbeispiel zur Anordnung eines Endoskops in der Bearbeitungsoptik 25 zeigt die Fig. 9. Hier ist eine Aufnahmebohrung 26 für ein nicht dargestelltes Endoskop horizontalliegend außermittig in dem Deckel 34 angeordnet. Die Aufnahmebohrung 86 mündet als Sackbohrung kurz vor der Reflexionsfläche 49 des Fokussierspiegels 45. Kurz vor dem Ende der Aufnahmebohrung 86 zweigt von derselben eine vertikale, kleinere Beobachtungsbohrung 87 ab, und zwar auf der Längsmittelachse 43 des fokussierten Laserstrahls 26 liegend. Der Durchmesser der Beobachtungsbohrung 87 ist relativ klein bemessen, beispielsweise 2 mm, so daß sie die Fläche der Reflexionsfläche 49 nur unwesentlich verringert und damit zu keinem nennenswerten Leistungsverlust des Laserstrahls führt. Mit einem derart angeordneten optischen Beobachtungsinstrument ist beispielsweise bei ausgeschaltetem Laser eine erstmalige Positionierung eines Bearbeitungsvorsatzes 28 gegenüber dem Gehäuse 29 möglich. Ebenso kann auf diese Weise der Bearbeitungsvorsatz 28 auf einen bestimmten Punkt des Werkstücks 27 positioniert werden.

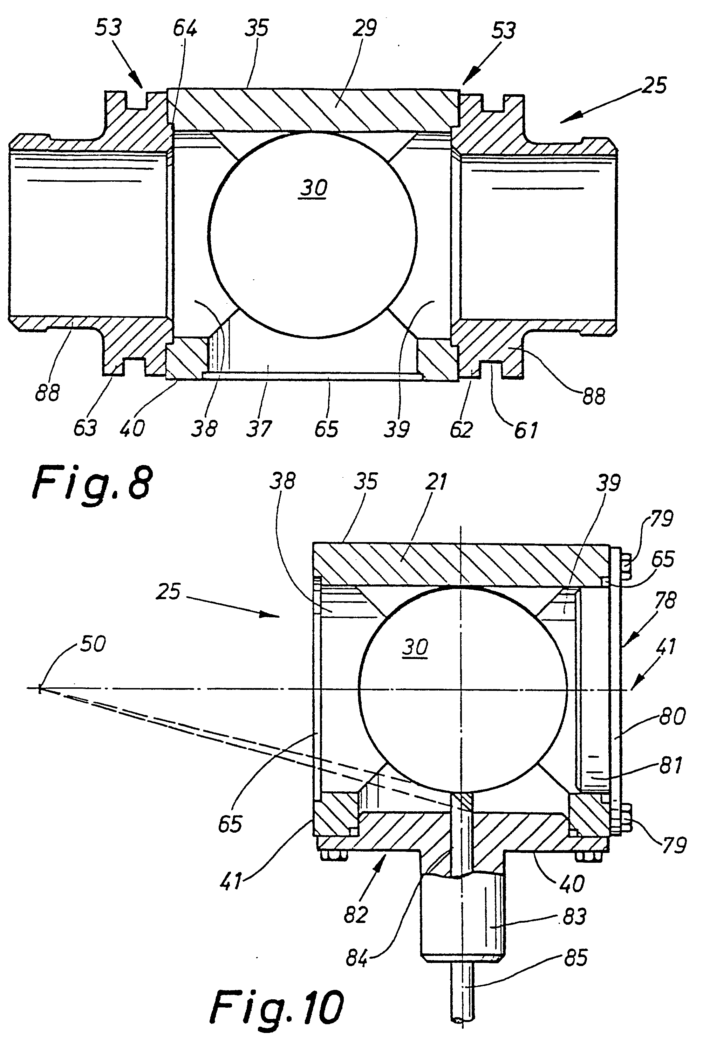

Schließlich zeigt die Fig. 8 ein weiteres Ausführungsbeispiel der Erfindung, bei der an den beiden unbesetzten (seitlichen) Austrittsöffnungen 38 und 39 jeweils ein Saugstutzen 88 am Gehäuse 29 durch einen Universalanschluß 53 befestigt ist. Die Saugstutzen 88 sind an eine Gasversorgung angeschlossen und dienen dazu, aus dem Inneren der Bearbeitungsoptik 25 während der Bearbeitung durch den Bearbeitungsvorsatz 28 eintretenden Staub, Rauch od. dgl. abzusaugen zum Schutz der Reflexionsflächen 46 bzw. 49 der Spiegel. Alternativ kann durch die Saugstutzen hindurch auch Schutzgas oder ein Kühlgas in das Innere der Bearbeitungsoptik 25 eingeblasen werden. Darüber hinaus ist es denkbar, die gegenüberliegenden Saugstutzen 88 als Gaseinlaß und Gasauslaß zu verwenden, wodurch in der Bearbeitungsoptik 25 ein horizontal gerichteter Gasstrom entsteht, der eine «Gasbarriere» gegen in die Bearbeitungsoptik 25 eindringenden Staub, Rauch etc. bildet.

Der Umlenkspiegel 44 und der Fokussierspiegel 45 sind bei den Vorrichtungen der beschriebenen Ausführungsbeispiele aus Kupfer hergestellt. Dadurch verändern die Spiegel infolge thermischer Beanspruchung während der Bearbeitung ihre Gestalt praktisch nicht, so dass keinerlei Nachjustierungen notwendig sind.

Die Reflexionsflächen 46 und 49 der Kupferspiegel sind entweder (hochglanz-)poliert oder bedampft, insbesondere gesputtet.

Die Fig. 2 und 3 zeigen im übrigen noch zwei Anschlüsse auf der oberen Wand 35 des Gehäuses 29, nämlich einen Kühlmitteleinlaß 89 und einen Kühlmittelauslaß 90. Durch diese Anschlüsse ist ein in den Figuren nicht dargestellter Kühlmittelkreislauf aus in den Wandungen des Gehäuses 29 angeordneten Bohrungen ver- und entsorgbar. Gegebenenfalls können sich die Kühlbohrungen in der Bearbeitungsoptik 25 auch über einen oder mehrere der Deckel 33 bzw. 34 erstrecken. Die Stirnseiten zwischen Gehäuse 29 einerseits und den Deckeln 33 bzw. 34 andererseits sind dann mit geeigneten Dichtungen zu versehen.

**Patentansprüche**

1. Vorrichtung zur Bearbeitung von Werkstücken durch einen Strahl hoher Leistungsflußdichte, insbesondere ein Laserstrahl eines $CO_2$-Lasers (20) mit einer zum Umformen des Laserstrahls dienenden Bearbeitungsoptik (25), die ein Gehäuse (29) mit darin angeordneten Strahlumlenkmitteln und wenigstens eine Eintrittsöffnung (36) und Austrittsöffnung (37, 38, 39) für den Laserstrahl aufweist, wobei die Eintrittsöffnung (36) und die Austrittsöffnung (37, 38, 39) ein Verbindungsorgan zum $CO_2$-Laser (20) und ein der zu erfolgenden Bearbeitung entsprechender Bearbeitungsvorsatz lösbar zugeordnet sind, dadurch gekennzeichnet, daß wenigstens die Strahlumlenkmittel mit dem Gehäuse (29) positionsgenau verbindbar sind, durch mindestens zwei Zentrierteile (95) aufweisende Schrauborgane zum Eingriff in korrespondierend zu den Schrauborganen ausgebildeten Aufnahmen in Haltemitteln für die Strahlumlenkmittel sowie mit korrespondierenden Zentrieransätzen (97) im Gehäuse (29).

2. Vorrichtung nach Anspruch 1, dadurch gekennzeichnet, daß die Aufnahmen als zur Befestigung der Strahlumlenkmittel (Fokussierspiegel 45; Umlenkspiegel 44) am Gehäuse (29) dienende Deckel (91, 92) ausgebildet sind, die über korrespondierend zu den Zentrierteilen (95) ausgebildeten Durchgangsbohrungen (96) verfügen.

3. Vorrichtung nach Anspruch 1 oder 2, dadurch gekennzeichnet, daß die Zentrierteile (95) einstückig mit den Schrauborganen verbunden sind.

4. Vorrichtung nach Anspruch 1 sowie einem oder mehreren der weiteren Ansprüche, dadurch gekennzeichnet, daß die Schrauborgane mit den daran angeordneten Zentrierteilen (95) als Rändelpaßschrauben ausgebildet sind.

5. Vorrichtung zur Bearbeitung von Werkstücken durch einen Strahl hoher Leistungsflußdichte, insbesondere einen Laserstrahl eines $CO_2$-Lasers (20), mit einer zum Umformen des Laserstrahls dienenden Bearbeitungsoptik (25), die ein Gehäuse (29) mit darin angeordneten Strahlumlenkmitteln und wenigstens eine Eintrittsöffnung (36) und Austrittsöffnung (37, 38, 39) für den Laserstrahl aufweist, wobei der Eintrittsöffnung (36) und der Austrittsöffnung (37, 38, 39) ein Verbindungsorgan zum $CO_2$-Laser (29) und ein der zu erfolgenden Bearbeitung entsprechender Bearbeitungsvorsatz lösbar zugeordnet sind, gekennzeichnet durch einen zur positionsgenauen Verbindung alternativer Bearbeitungsvorsätze (28) bzw. der Strahlumlenkmittel mit dem Gehäuse (29) dienenden Universalverschluß (53, 56) aus einem Satz außen am Gehäuse (29) angeordneter Spannpratzen (54, 67), die in mindestens eine korrespondierend zu den Spannpratzen (54, 67) ausgebildete Nut (Ringnut 58; Nutabschnitt 69) eingreifen, sowie aus einem radialen Zentrierorgan (64, 70) und einer Verdrehsicherung.

6. Vorrichtung nach Anspruch 5, dadurch gekennzeichnet, daß bei einem Gehäuse (29) mit offenen und durch Deckel (33, 34) zur Aufnahme der Strahlumlenkmittel (Umlenkspiegel 44; Fokussierspiegel 45) verschlossenen Stirnseiten (31, 32) jedem Deckel (33, 34) am Gehäuse (29) ein Universalverschluß (66) zugeordnet ist.

7. Vorrichtung nach Anspruch 5 oder 6, dadurch gekennzeichnet, daß jeder Universalverschluß (66) einen Satz aus zwei gegenüberliegenden Spannpratzen (54, 67) aufweist, die im Randbereich der Eintrittsöffnung (36), der Austrittsöffnung (37, 38, 39) bzw. den Stirnseiten (31, 32) des Gehäuses (29) angeordnet sind.

8. Vorrichtung nach einem oder mehreren der Ansprüche 5 bis 7, dadurch gekennzeichnet, daß die Spannpratzen (54, 67) von außen an das Gehäuse (29) anschraubbar sind.

9. Vorrichtung nach Anspruch 8, dadurch gekennzeichnet, daß die Spannpratzen (54, 67) L-förmig ausgebildet sind, mit einer in die Nut (Ringnut 58; Nutabschnitt 69) eingreifenden und korrespondierend zu der Nut (Ringnut 58; Nutabschnitt 69) ausgebildeten Nase (56).

10. Vorrichtung nach Anspruch 5, sowie einem oder mehreren der weiteren Ansprüche, dadurch gekennzeichnet, daß an den Bearbeitungsvorsätzen (28) od. dgl. jeweils eine gleich bemessene, umlaufende Ringnut (58) angeordnet ist zum Eingriff der Nasen (56) der Spannpratzen (54).

11. Vorrichtung nach Anspruch 10, dadurch gekennzeichnet, daß die Ringnut (58) im Endbereich der Bearbeitungsvorsätze (28) od dgl. durch zwei mit Abstand voneinander am Umfang derselben angeordnete, ringförmige Kragen (62, 63) gebildet ist, mit korrespondierenden Abmessungen zu den Spannpratzen (54) bzw. der an denselben angeordneten Nasen (56).

12. Vorrichtung nach Anspruch 6 sowie einem oder mehreren der weiteren Ansprüche, dadurch gekennzeichnet, daß an den Deckeln (33, 34) Nutabschnitte (69) aus vorzugsweise vier gradlinigen Einfräsungen in den (runden) Deckeln (33, 34) angeordnet sind, die sich paarweise gegenüberliegen bei um etwa 90° zueinander versetzten Paaren von Nutabschnitten (69).

13. Vorrichtung nach Anspruch 5 sowie einem oder mehreren der weiteren Ansprüche, dadurch gekennzeichnet, daß die Bearbeitungsvorsätze (28) od. dgl. an einer zum Gehäuse (29) gerichteten Stirnseite einen zylindrischen Zentrieransatz (64) aufweisen, dem eine komplementär ausgebildete Ausnehmung (65) am oberen Rand der Eintrittsöffnung (36) bzw. der Austrittsöffnung (37, 38, 39) zugeordnet ist zur Bildung des radialen Zentrierorgans.

14. Vorrichtung nach Anspruch 12, dadurch gekennzeichnet, daß die Deckel (33, 34) zur Bildung des radialen Zentrierorgans einen in eine Durchgangsbohrung (30) im Gehäuse (29) eingreifenden und korespondierend zu derselben ausgebildeten Zylinderansatz (70) zur Zentrierung der in den Deckeln (33, 34) angeordneten Spiegel (Fokussierspiegel 45; Umlenkspiegel 44) aufweisen.

15. Vorrichtung nach Anspruch 5 sowie einem oder mehreren der weiteren Ansprüche, dadurch gekennzeichnet, daß die Verdrehsicherung an jedem Universalverschluß (53, 66) aus wenigstens einem (federnden) Kugeldruckstück (71, 76) besteht.

16. Vorrichtung nach Anspruch 15, dadurch gekennzeichnet, daß jedem Kugeldruckstück (71, 76) in dem zu sichernden Bearbeitungsvorsatz (28) bzw. Deckel (33, 34) eine Sackbohrung (75, 77) zugeordnet ist, in die ein Teil einer federnd vorgespannten Kugel (73) des Kugeldruckstücks (71, 76) formschlüssig eingreift zur Positionierung der Bearbeitungsvorsätze (28) bzw. Deckel (33, 34) in einer einmal einjustierten (Dreh-) Lage.

17. Vorrichtung nach Anspruch 15, dadurch gekennzeichnet, daß in jedem Deckel (33, 34) zwei gegenüberliegende Kugeldruckstücke (71) mit zwei entsprechend positionierten Sackbohrungen (75) im Gehäuse (29) für jede mögliche (Dreh-) Lage der Deckel (33, 34) bzw. der Strahlumlenkmittel (Umlenkspiegel 44; Fokussierspiegel 45) angeordnet sind.

18. Vorrichtung nach Anspruch 15, dadurch gekennzeichnet, daß jedem Universalverschluß (53) für die Bearbeitungsvorsätze (28) od. dgl. mindestens ein im Gehäuse (29) angeordnetes Kugeldruckstück (76) zugeordnet ist mit mindestens einer demselben gegenüberliegenden Sackbohrung (77) in den Bearbeitungsvorsätzen (28) od. dgl.

**Claims**

1. Device for processing workpieces by means of a beam of high power flux density, in particular a laser beam from a $CO_2$ laser (20), having process optics (25) which are used for reshaping the laser beam and have a casing (29) with beam deflection means arranged therein and at least one inlet opening (36) and outlet opening (37, 38, 39) for the laser beam, a connecting element to the $CO_2$ laser (20) and a process adaptor corresponding to the processing to be carried out being releasably associated with the inlet opening (36) and the outlet opening (37, 38, 39), characterised in that at least the beam deflection means are connectable with positional exactitude to the casing (29) by screwed elements, having at least 2 centering parts (95), for engagement in seats in holding means for the beam deflection means, said seats being of a corresponding design to the screwed elements, and by corresponding centering shoulders (97) in the casing (29).

2. Device according to Claim 1, characterised in that the seats are designed as covers (91, 92) which are used for securing the beam deflection means (focusing mirror 45; deflection mirror 44) on the casing (29) and have through holes (96) of corresponding design to the centering parts (95).

3. Device according to Claim 1 or 2, characterised in that the centering parts (95) are connected integrally to the screwed elements.

4. Device according to Claim 1 and one or more of the other claims, characterised in that the screw elements with the centering parts (95) arranged thereon are designed as knurled fitted screws.

5. Device for processing workpieces by means of a beam of high power flux density, in particular a laser beam from a $CO_2$ laser (20), having process optics (25) which are used for reshaping the laser beam and have a casing (29) with beam deflection means arranged therein and at least one inlet opening (36) and outlet opening (37, 38, 39) for the laser beam, a connecting element to the $CO_2$ laser (20) and a process adaptor corresponding to the processing to be carried out being releasably associated with the inlet opening (36) and the outlet opening (37, 38, 39), characterised by a universal connection (53, 56) serving for the positionally exact connection of alternative process adaptors (28) or of the beam deflection means to the casing (29) and comprising a set of clamps (54, 67) which are arranged on the outside of the casing (29) and engage in at least one groove (annular groove 58; groove segment 69) of corresponding design to the clamps (54, 67), a radial centering element (64, 70) and an antirotation device.

6. Device according to Claim 5, characterised in that, in the case of a casing (29) having ends (31, 32) which are open and closed by covers (33, 34) for accommodating the beam deflection means (deflection mirror 44; focusing mirror 45), a universal connection (66) is associated with each cover (33, 34) at the casing (29).

7. Device according to Claim 5 or 6, characterised in that every universal connection (66) has a set of two opposite clamps (54, 67) which are located in the edge region of the inlet opening (36), of the outlet opening (37, 38, 39) or of the ends (31, 32) of the casing (29).

8. Device according to one or more of Claims 5 to 7, characterised in that the clamps (54, 67) can be screwed onto the casing (29) from the outside.

9. Device according to Claim 8, characterised in that the clamps (54, 67) are designed L-shaped, with a protrusion (56) engaging in the groove (annular groove 58; groove segment 69) and of corresponding design to the groove (annular groove 58; groove segment 69).

10. Device according to Claim 5 and one or more of the other claims, characterised in that one similarly dimensioned peripheral annular groove (58) is located on each of the process adaptors (28) or the like for engagement with the protrusions (56) of the clamps (54).

11. Device according to Claim 10, characterised in that the annular groove (58) in the end region of the process adaptors (28) or the like is formed by two annular collars (62 and 63) located at a distance from one another on the periphery of the process adaptors and the protective tube, the annular groove having dimensions corresponding to the clamps (54) and to the protrusions (56) located on them.

12. Device according to Claim 6 and one or more of the other claims, characterised in that groove segments (69) are located on the covers (33, 34) and are composed preferably of four straight milling cuts in the (round) covers (33, 34) which lie opposite one another in pairs, with pairs of groove segments (69) displaced by approximately 90° relative to one another.

13. Device according to Claim 5 and one or more of the other claims, characterised in that the process adaptors (28) or the like have a cylindrical centering spigot (64) on an end surface directed towards the casing (29), a complementary design of recess (65) on the upper edge of the inlet opening (36) and the outlet opening (37, 38, 39) being associated with the spigot (64) to form the radial centering element.

14. Device according to Claim 12, characterised in that, for the formation of the radial centering element, the covers (33, 34) have a cylindrical spigot (70), engaging in a through hole (30) in the casing (29) and designed to correspond to the hole, for centering the mirrors (focusing mirror 45; deflection mirror 44) located in the covers (33, 34).

15. Device according to Claim 5 and one or more of the other claims, characterised in that the antirotation device on each universal connection (53, 66) consists of at least one (sprung) ball catch (71, 76).

16. Device according to Claim 15, characterised in that with each ball catch (71, 76) in the process adaptor (28) and cover (33, 34) to be secured is associated a blind hole (75, 77), in which part of a spring-loaded ball (73) of the ball catch (71, 76) engages with positive engagement in order to position the process adaptors (28) and covers (33, 34) in a (rotational) position, which is adjusted only once.

17. Device according to Claim 15, characterised in that two opposite ball catches (71), with two correspondingly positioned blind holes (75) in the casing (29) for each possible (rotational) position of the cover (33, 34) and of the beam deflection means (deflection mirror 44; focusing mirror 45), are located in each cover (33, 34).

18. Device according to Claim 15, characterised in that with each universal connection (53) for the process adaptors (28) or the like is associated at least one ball catch (76) located in the casing (29), together with at least one blind hole (77), opposite to the ball catch (76), in the process adaptors (28) or the like.

## Revendications

1. Dispositif de travail de pièces au moyen d'un faisceau à haute densité de flux de puissance, en particulier d'un faisceau laser d'un laser à $CO_2$ (20), comportant une optique de travail (25) servant à transformer le faisceau laser, qui comporte un boîtier (29) dans lequel sont disposés des moyens de déviation du faisceau et pourvu au moins d'un orifice d'entrée (36) et d'un orifice de sortie (37, 38, 39) pour le faisceau laser, à l'orifice d'entrée (36) et à l'orifice de sortie (37, 38, 39) étant adjoints de manière amovible un organe de liaison au laser à $CO_2$ (20) et un adaptateur de travail correspondant au travail à exécuter, caractérisé par le fait qu'au moins les moyens de déviation du faisceau peuvent être réunis suivant une position précise au boîtier (29) au moyen au moins de deux organes à vis présentant des parties de centrage (95) destinés à être engagés dans des moyens de réception y correspondant prévus dans des moyens de support des moyens de déviation du faisceau ainsi qu'avec des appendices de centrage correspondants (97) dans le boîtier (29).

2. Dispositif selon la revendication 1, caractérisé par le fait que les moyens de réception sont réalisés en forme de couvercles (91, 92) servant à la fixation au boîtier (29) des moyens de déviation du faisceau (miroir de focalisation 45, miroir de déviation 44) et disposant de trous traversants (96) correspondant aux parties de centrage (95).

3. Dispositif selon l'une des revendications 1 à 2, caractérisé par le fait que les parties de centrage (95) font corps avec les organes à vis.

4. Dispositif selon la revendication 1, ainsi qu'une ou plusieurs des autres revendications, caractérisé par le fait que les organes à vis sur lesquels sont disposés les parties de centrage (95) sont des vis ajustées à tête moletée.

5. Dispositif de travail de pièces au moyen d'un faisceau à haute densité de flux de puissance, en particulier d'un faisceau laser d'un laser à $CO_2$ (20), comportant une optique de travail (25) servant à transformer le faisceau laser, qui comporte un boîtier (29) dans lequel sont disposés des moyens de déviation du faisceau et pourvu au moins d'un orifice d'entrée (36) et d'un orifice de sortie (37, 38, 39) pour le faisceau laser, à l'orifice d'entrée (36) et à l'orifice de sortie (37, 38, 39) étant adjoints de manière amovible un organe de liaison au laser à $CO_2$ (20) et un adaptateur de travail correspondant au travail à exécuter, caractérisé par un joint universel (53, 56) servant à la réunion suivant une position précise de différents adaptateurs de travail (28) ou des moyens de déviation du faisceau au boîtier (29) et constitué d'un groupe de griffes de serrage (54, 67) placées extérieurement sur le boîtier (29) qui s'engagent dans au moins une rainure (rainure annulaire 58, rainure droite 69) y correspondant ainsi que d'un organe radial de centrage (64, 70) et d'un dispositif antirotation.

6. Dispositif selon la revendication 5, caractérisé par le fait que dans le cas d'un boîtier (29) ayant des côtés frontaux ouverts (31, 32) fermés par des couvercles (33, 34) destinés à recevoir les moyens de déviation du faisceau (miroir de déviation 44, miroir de focalisation 45), à chacun des couvercles (33, 34) du boîtier (29) est adjoint un joint universel (66).

7. Dispositif selon l'une des revendications 5 et 6, caractérisé par le fait que chaque joint universel (66) comporte un groupe de deux griffes de serrage opposées (54, 67) placées dans la zone du bord de l'orifice d'entrée (36), de l'orifice de sortie (37, 38, 39) ou des côtés frontaux (31, 32) du boîtier (29).

8. Dispositif selon l'une ou plusieurs des revendications 5 à 7, caractérisé par le fait que les griffes de serrage (54, 67) peuvent être vissées de l'extérieur au boîtier (29).

9. Dispositif selon la revendication 8, caractérisé par le fait que les griffes de serrage (54, 67) ont une forme de L, avec un talon (56) correspondant à la rainure (rainure annulaire 58, rainure droite 69) qui s'y engage.

10. Dispositif selon la revendication 5 ainsi qu'une ou plusieurs des autres revendications, caractérisé par le fait que sur chacun des adaptateurs de travail (28) ou éléments semblables est ménagée une rainure annulaire (58) de mêmes dimensions pour l'engagement des talons (56) des griffes de serrage (54).

11. Dispositif selon la revendication 10, caractérisé par le fait que la rainure annulaire (58) est formée dans la zone d'extrémité des adaptateurs de travail (28) ou éléments semblables par deux collets annulaires espacés (62, 63) et à des dimensions correspondant aux griffes de serrage (54), plus précisément au talon (56) de celles-ci.

12. Dispositif selon la revendication 6 ainsi qu'une ou plusieurs des autres revendications, caractérisé par le fait que les couvercles (33, 34) (ronds) présentent des rainures droites (69) constituées de préférence de quatre fraisures droites pratiquées dans les couvercles (33, 34) qui sont opposées deux à deux, les paires de rainures opposées étant à environ 90° l'une de l'autre.

13. Dispositif selon la revendication 5 ainsi qu'une ou plusieurs des autres revendications, caractérisé par le fait que les adaptateurs de travail (28) ou éléments semblables présentent sur un côté frontal dirigé vers le boîtier (29) un appendice cylindrique de centrage (64) auquel est associé, pour la formation de l'organe radial de centrage, un évidement de forme complémentaire (65) ménagé sur le bord supérieur de l'orifice d'entrée (36) ou de l'orifice de sortie (37, 38, 39).

14. Dispositif selon la revendication 12, caractérisé par le fait que les couvercles (33, 34) présentent pour la formation de l'organe radial de centrage un appendice cylindrique (70) correspondant à un trou traversant (30) du boîtier (29) et s'y engageant et destiné au centrage des miroirs (miroir de focalisation 45, miroir de déviation 44) montés dans les couvercles (33, 34).

15. Dispositif selon la revendication 5 ainsi qu'une ou plusieurs des autres revendications, caractérisé par le fait que le dispositif antirotation prévu à chacun des joints universels (53, 66) est constitué au moins d'un élément de pression à bille (à ressort) (71, 76).

16. Dispositif selon la revendication 15, caractérisé par le fait qu'à chaque élément de pression à bille (71, 76) prévu dans l'adaptateur de travail (28) ou le couvercle (33, 34) à fixer est associé un trou borgne (72, 77) dans lequel une partie d'une bille (73) de l'élément de pression à bille (71, 76) soumise à l'action d'un ressort s'engage pour la mise des adaptateurs de travail (28) ou des couvercles (33, 34), dans une position (angulaire) prédéterminée.

17. Dispositif selon la revendication 15, caractérisé par le fait que dans chacun des couvercles (33, 34) sont disposés deux éléments de pression à bille (71) opposés avec deux trous borgnes (75) de positions correspondantes dans le boîtier (29) pour chaque position (angulaire) possible des couvercles (33, 34) ou des moyens de déviation du faisceau (miroir de déviation 44, miroir de focalisation 45).

18. Dispositif selon la revendication 15, caractérisé par le fait qu'à chaque joint universel (53) pour les adaptateurs de travail (28) ou éléments semblables est adjoint au moins un élément de pression à bille (76) disposé dans le boîtier (29) avec au moins un trou borgne (77) en regard pratiqué dans les adaptateurs de travail (28) ou éléments semblables.

*Fig. 1*

EP 0 156 231 B1

Fig. 2

EP 0 156 231 B1

Fig. 3

Fig. 4

Fig. 7

# Fig. 5

*56*  *24*  *57*  *55*

*58*  *53*

*60*  *54*

*35*

*36*

*59*  *30*

*31*

*30*

*29*

*40*

# Fig. 6

*54*  *57*  *58*

*29*

*60*

*35*

*54*  *55*

Fig. 9

EP 0 156 231 B1

Fig.8

Fig.10

# FIG. 11

# FIG. 12